# EUROPÄISCHE PATENTSCHRIFT

(11) **EP 1 643 469 B1**
(45) Veröffentlichungstag und Bekanntmachung des Hinweises auf die Patenterteilung: **09.04.2008**
(21) Anmeldenummer: 05018949.7
(22) Anmeldetag: 31.08.2005
(51) Int. Cl.: G08B 5/36, G08B 13/196

(54) **Sensorsystem**
Sensor system
Système de détection

(30) Priorität: 01.10.2004 DE 102004047962
(43) Veröffentlichungstag der Anmeldung: 05.04.2006
(73) Patentinhaber: Patent-Treuhand-Gesellschaft für elektrische Glühlampen mbH, 81543 München (DE)
(72) Erfinder: Huber, Andreas, 83301 Traunreut (DE); Schleicher, Gotthard, Dr., 83349 Palling (DE)
(74) Vertreter: Raiser, Franz

(56) Entgegenhaltungen:
- US-A- 5 717 379
- US-A- 6 154 133
- US-A1- 2003 210 340

## Beschreibung

### Technisches Gebiet

Die vorliegende Erfindung betrifft ein Sensorsystem mit einer Videokamera und einer Auswerteeinheit. Die Auswerteeinheit hat einen Eingang und einen Ausgang, wobei der Eingang ein Videosignal von der Videokamera erhält und der Ausgang Ausgangsinformationen über Beleuchtungsstärke und Bewegung eines Beobachtungsraums bereit stellt. Sie betrifft außerdem ein Verfahren zum Steuern eines Kunstlichtanteils von steuerbaren Lichtquellen durch eine Lichtsteueranlage. Dabei wird ein Videosignal durch eine Videokamera aufgenommen, an den Eingang der Auswerteeinheit weiter gegeben und in der Auswerteeinheit bzgl. Beleuchtungsstärke und Bewegung ausgewertet. Am Ausgang der Auswerteeinheit werden die Informationen über Beleuchtungsstärke und Bewegung an eine Steuereinheit ausgegeben, die eine gewünschte Helligkeit der steuerbaren Lichtquellen einstellt.

### Stand der Technik

Bekannt sind Lichtsteueranlagen, die mit Bewegungsmeldern (i. d. R. PIR-Sensoren) und Lichtsensoren (Fotowiderstände oder Fototransistoren bzw. Fotodioden) Kunstlicht abhängig von Bewegung und Beleuchtungsstärke steuern bzw. regeln. Die Messsignale werden einem Steuergerät zugeführt, das die Kunstlichtquellen steuert. Lichtsteueranlagen für mehrere Lichtquellen oder große Beobachtungsräume benötigen mehrere Bewegungsmelder, um den gesamten Raum zu erfassen bzw. mehrere Lichtsensoren. Damit ergibt sich insgesamt eine große Anzahl verschiedener Sensoren, die separat auf den gewünschten Erfassungsbereich eingestellt werden müssen und einen hohen Installationsaufwand verursachen. Außerdem sind Überschneidungen in den Erfassungsbereichen v. a. bei den Lichtsensoren oft unvermeidbar und für die Funktion störend. Bestimmte Bereiche im Erfassungsfeld eines Sensors können nicht ausgeblendet werden, um beispielsweise die Interpretation eines Ventilators als Bewegung auszuschließen.

Aus US 2003/0210340 ist eine multifunktionale Kamera bekannt, die als alleinigen Anschluss einen konventionellen Schraubsocuel besitzt und so nur einen minimalen installationsaufwand erfordert.

### Darstellung der Erfindung

Es ist Aufgabe der vorliegenden Erfindung, ein Sensorsystem gemäß dem Oberbegriff des Anspruchs 1 zur Steuerung eines Kunstlichtanteils bereitzustellen.

Diese Aufgabe wird durch ein Sensorsystem mit den Merkmalen des Oberbegriffs des Anspruchs 1 durch die Merkmale des kennzeichnenden Teils des Anspruchs 1 gelöst. Besonders vorteilhafte Ausgestaltungen finden sich in den abhängigen Ansprüchen.

Erfindungsgemäß ist ein Sensorsystem mit einer Videokamera und einer Auswerteeinheit vorgesehen, wobei der Eingang der Auswerteeinheit ein Videosignal von der Videokamera erhält und der Ausgang der Auswerteeinheit Ausgangsinformationen über Beleuchtungsstärke und Bewegung eines Beobachtungsraums bereit stellt.

Bevorzugt beinhaltet die Videokamera des Sensorsystems ein CCD, MOS-Chip oder andere Chiptechnologien zur Aufnahme von Bildinformationen.

Bei einer bevorzugten Ausführung des Sensorsystems beinhaltet die Auswerteeinheit einen Microcontroller oder einen Digital-Signal-Processor (DSP), der Berechnungen zur Bereitstellung der Ausgangsinformationen vornimmt. Bei größeren Lichtanlagen können diese Berechnungen auch von einem Computersystem mit einer Ausstattung zur Verarbeitung von Videosignalen ausgeführt werden.

Eine besonders bevorzugte Ausführungsform des Sensorsystems sieht vor, den Beobachtungsraum in verschiedene Gebiete einzuteilen und diese bei einer Auswertung unterschiedlich zu gewichten. Beispielsweise kann auch ein großer Beobachtungsraum für die Erfassung von Bewegung vorgesehen sein und die Erfassung der Beleuchtungsstärke nur in einem Ausschnitt des großen Beobachtungsraums erfolgen.

Weitere bevorzugte Ausführungsformen ergeben sich aus den Unteransprüchen.

### Kurze Beschreibung der Zeichnungen

Im folgenden soll die Erfindung anhand von Ausführungsbeispielen unter Bezugnahme auf Zeichnungen näher erläutert werden. Es zeigen:
- Figur 1: in schematischer Darstellung den Aufbau eines Systems zur Steuerung eines Kunstlichtanteils
- Figur 2: in schematischer Darstellung ein Videobild mit verschiedenen Gebieten, die bei der Auswertung unterschiedlich gewichtet werden können

### Bevorzugte Ausführung der Erfindung

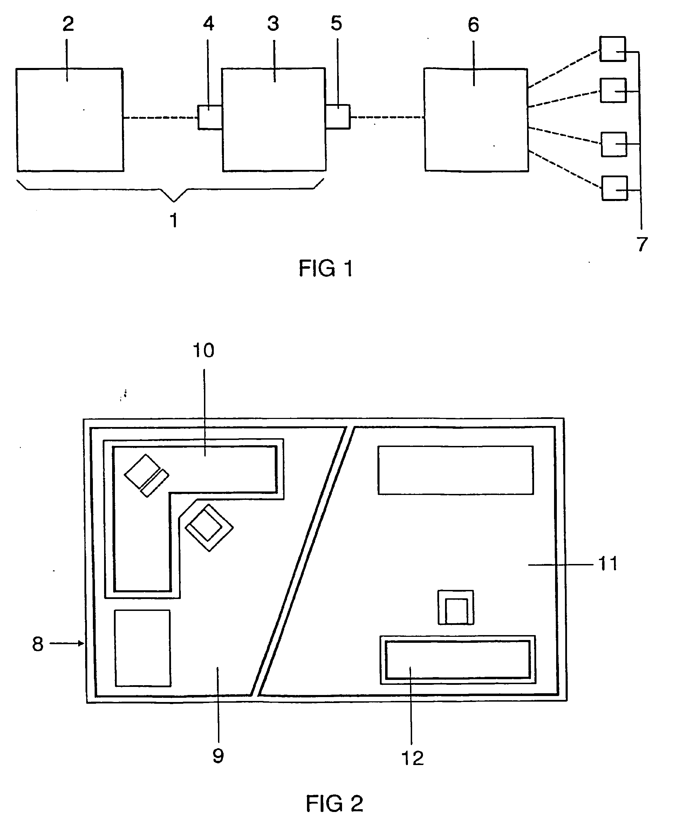

Figur 1 zeigt den Aufbau eines Systems zur Steuerung eines Kunstlichtanteils. Die Lichtsteueranlage beinhaltet das Sensorsystem 1 und die Steuereinheit 6. Eine Videokamera 2 nimmt ein Videobild eines Beobachtungsraums auf. Die Videokamera 2 ist mit einer Auswerteeinheit 3 verbunden und gibt das Videosignal an den Eingang 4 der Auswerteeinheit 3 weiter. Die Videokamera 2 und die Auswerteeinheit 3 bilden das Sensorsystem 1. In der Auswerteeinheit 3 wird das Videosignal bzgl. Beleuchtungsstärke und Bewegung im Beobachtungsraum ausgewertet. Die Auswerteeinheit 3 ist mit der Steuereinheit 6 verbunden. Die Steuereinheit 6 erhält die Informationen über Beleuchtungsstärke und Bewegung vom Ausgang 5 der Auswerteeinheit 3. Die Steuereinheit 6 stellt die gewünschte Helligkeit der steuerbaren Lichtquellen 7 ein.

Figur 2 zeigt ein Videobild eines Beobachtungsraums 8, der eine Bürosituation betrifft. Auf dem Videobild sind verschiedene Gebiete 9-12 eingezeichnet, die bei der Auswertung bzgl. Bewegung und Beleuchtungsstärke im Ausführungsbeispiel unterschiedlich gewichtet werden sollen. Das Videobild kann beispielsweise eingeteilt werden in ein Gebiet 9 für Information über Bewegung über Arbeitsplatz 1, ein Gebiet 10 (Schreibtisch) für Information über Beleuchtungsstärke über Arbeitsplatz 1, ein Gebiet 11 für Information über Bewegung über Arbeitsplatz 2 und ein Gebiet 12 für Information über Beleuchtungsstärke über Arbeitsplatz 2.

## Patentansprüche

1. Ein Sensorsystem mit einer Videokamera und einer Auswerteeinheit, wobei
die Auswerteeinheit einen Eingang und einen Ausgang hat, der Eingang ein Videosignal von der Videokamera erhält und der Ausgang Informationen über Beleuchtungsstärke und Bewegung in einem Beobachtungsraum bereitstellt **dadurch gekennzeichnet, dass** um einen Kunstlichtanteil in diesem zu steuern, der Beobachtungsraum in verschiedene Gebiete eingeteilt ist, die bei einer Auswertung unterschiedlich gewichtet sind.

2. Sensorsystem nach Anspruch 1
**dadurch gekennzeichnet, dass** die Videokamera ein CCD oder MOS-Chip beinhaltet.

3. Sensorsystem nach Anspruch 1 oder 2
**dadurch gekennzeichnet, dass** die Auswerteeinheit einen Microcontroller oder DSP beinhaltet, der Berechnungen zur Bereitstellung der Informationen vornimmt.

4. Sensorsystem nach Anspruch 1 oder 2
**dadurch gekennzeichnet, dass** die Auswerteeinheit ein Computersystem mit einer Ausstattung zur Verarbeitung von Videosignalen beinhaltet, das Berechnungen zur Bereitstellung der Informationen vornimmt.

5. Sensorsystem nach einem der vorhergehenden Ansprüche
**dadurch gekennzeichnet, dass** die Videokamera zu Überwachungszwecken nutzbar ist.

6. Lichtsteueranlage
**dadurch gekennzeichnet, dass** sie ein Sensorsystem gemäß einem der vorhergehenden Ansprüche umfasst.

7. Verfahren zum Steuern eines Kunstlichtanteils von steuerbaren Lichtquellen durch eine Lichtsteueranlage
**gekennzeichnet durch** folgende Schritte:
- Aufnahme eines Videosignals **durch** eine Videokamera
- Weitergabe des Videosignals an den Eingang der Auswerteeinheit
- Auswertung des Videosignals bzgl. Beleuchtungsstärke und Bewegung in der Auswerteeinheit
- Ausgabe der Informationen über Beleuchtungsstärke und Bewegung am Ausgang der Auswerteeinheit an eine Steuereinheit
- Einstellen einer gewünschten Helligkeit der steuerbaren Lichtquellen durch die Steuereinheit entsprechend vorgegebenen Sollwerten.

## Claims

1. Sensor system having a video camera and an evaluation unit, in which the evaluation unit has an input and an output, the input receives a video signal from the video camera, and the output provides information relating to luminance and movement in an observation space, **characterized in that**, in order to control the artificial light component in the latter, the observation space is divided into various zones which are weighted differently during an evaluation.

2. Sensor system according to claim 1, **characterized in that** the video camera includes a CCD or MOS chip.

3. Sensor system according to claim 1 or 2, **characterized in that** the evaluation unit includes a microcontroller or DSP that undertakes calculations in order to provide the information.

4. Sensor system according to claim 1 or 2, **characterized in that** the evaluation unit includes a computer system with equipment for processing video signals that undertakes calculations in order to provide the information.

5. Sensor system according to one of the preceding claims, **characterized in that** the video camera can be used for monitoring purposes.

6. Light control system **characterized in that** it comprises a sensor system according to one of the preceding claims.

7. Method for controlling an artificial light component of controllable light sources by means of a light control system, **characterized by** the following steps:
- picking up a video signal by a video camera
- relaying the video signal to the input of the evaluation unit
- evaluating the video signal with reference to luminance and movement in the evaluation unit
- outputting the information relating to luminance and movement at the output of the evaluation unit to a control unit
- setting a desired brightness of the controllable light sources by means of the control unit in accordance with prescribed setpoints.

## Revendications

1. Système de capteur comportant une caméra vidéo et une unité d'exploitation, l'unité d'exploitation comportant une entrée et une sortie, l'entée recevant un signal vidéo de la caméra vidéo et la sortie délivrant des informations sur l'intensité lumineuse et le déplacement dans une salle d'examen, **caractérisé en ce que**, pour régler une proportion de lumière artificielle dans cette salle d'examen, la salle d'examen est divisée en diverses régions qui sont pondérées différemment lors de l'exploitation.

2. Système de capteur selon la revendication 1, **caractérisé en ce que** la caméra vidéo comporte une puce CCD ou MOS.

3. Système de capteur selon la revendication 1 ou 2, **caractérisé en ce que** l'unité d'exploitation comporte un microcontrôleur ou un processeur de traitement numérique de signal (DSP), qui effectue des calculs en vue de délivrer les informations.

4. Système de capteur selon la revendication 1 ou 2, **caractérisé en ce que** l'unité d'exploitation contient un système informatique qui est apte à traiter des signaux vidéo et qui effectue des calculs en vue de délivrer des informations.

5. Système de capteur selon l'une des revendications précédentes, **caractérisé en ce que** la caméra vidéo peut être utilisée dans un but de surveillance.

6. Installation de réglage de lumière, **caractérisée en ce qu'**elle comporte un système de capteur selon l'une des revendications précédentes.

7. Procédé permettant de régler au moyen d'une installation de réglage de lumière une proportion de lumière artificielle provenant de sources lumineuses réglables, **caractérisé par** des étapes suivantes consistant à :
- enregistrer un signal vidéo au moyen d'une caméra vidéo,
- transmettre le signal vidéo à l'entrée de l'unité d'exploitation,
- exploiter le signal vidéo respectivement l'intensité lumineuse et le déplacement dans l'unité d'exploitation,
- délivrer à une unité de réglage les informations sur l'intensité de l'éclairage et le déplacement qui sont en sortie de l'unité d'exploitation,
- régler une luminosité souhaitée des sources lumineuses réglables au moyen de l'unité de réglage conformément à des valeurs de consigne prescrites.
